# FASCICULE DE BREVET EUROPEEN

(11) **EP 3 068 101 B1**
(45) Date de publication et mention de la délivrance du brevet: **18.11.2020**
(21) Numéro de dépôt: 16159703.4
(22) Date de dépôt: 10.03.2016
(51) Int. Cl.: H04L 29/06

(54) **SYSTEME ELECTRONIQUE DE REEMISSION SECURISEE DE MESSAGES, PROCEDE DE REEMISSION ET PRODUIT PROGRAMME D'ORDINATEUR ASSOCIES**
ELEKTRONISCHES SYSTEM ZUR GESICHERTEN ERNEUTEN SENDUNG VON NACHRICHTEN, ENTSPRECHENDES VERFAHREN ZUR ERNEUTEN SENDUNG UND ENTSPRECHENDES COMPUTERPROGRAMMPRODUKT
ELECTRONIC SYSTEM FOR SECURELY RETRANSMITTING MESSAGES, ASSOCIATED RETRANSMISSION METHOD AND COMPUTER PROGRAM PRODUCT

(30) Priorité: 12.03.2015 FR 1500473
(43) Date de publication de la demande: 14.09.2016
(73) Titulaire: THALES LAS FRANCE SAS, 78990 Elancourt (FR)
(72) Inventeur: CIVEIT, Cédric, 91883 MASSY (FR); LEMOINE, Thierry, 91883 MASSY (FR); COUTEAU, Jean-François, 91883 MASSY (FR)
(74) Mandataire: Lavoix

(56) Documents cités:
- WO-A2-2012/166440
- US-A1- 2004 111 639
- US-A1- 2012 047 364
- US-A1- 2014 201 273
- US-B2- 7 293 175
- Florian Bikouo Favier ET AL: "Développement d'un module de décodage logiciel WIRESHARK pour le trafic radar au format ASTERIX", , 2007, pages 1-32, XP055242678, Extrait de l'Internet: URL:http://www.recherche.enac.fr/~nlarrieu /lib/exe/fetch.php?media=rapport_de_projet _asterix.pdf [extrait le 2016-01-19]
- WILKINSON J: "THE SMPTE DATA CODING PROTOCOL AND DICTIONARIES", SMPTE - MOTION IMAGING JOURNAL, SOCIETY OF MOTION PICTURE AND TELEVISION ENGINEERS, WHITE PLAINS, NY, US, vol. 109, no. 7, juillet 2000 (2000-07), pages 579-586, XP000950346, ISSN: 0036-1682

## Description

La présente invention concerne un système électronique de réémission sécurisée de messages préalablement reçus par ledit système.

L'invention concerne également un procédé de réémission sécurisée de messages préalablement reçus par un tel système électronique.

L'invention concerne en outre un produit programme d'ordinateur comportant des instructions logicielles qui lorsqu'elles sont exécutées par un ordinateur mettent en œuvre un tel procédé de réémission.

L'invention s'applique au domaine de la sécurisation des échanges d'informations en temps réel, et concerne plus particulièrement la cyber-défense.

Actuellement, les solutions de déclassification d'informations, c'est-à-dire d'échanges d'informations depuis un domaine de confidentialité donnée vers un domaine de confidentialité inférieure, sont pour la plupart basées sur des mécanismes de signature et de labellisation de messages. De tels mécanismes, à ce niveau d'inspection des données, nécessitent une intervention humaine dans le traitement continu des messages litigieux afin de valider ce qui peut être émis vers le domaine de confidentialité inférieure.

Cependant, une telle intervention humaine, qui doit lire, comprendre, potentiellement modifier des informations et donner son autorisation pour chaque message n'est pas compatible avec le nombre de messages à traiter par seconde, ni avec des contraintes fortes de délais d'acheminement des messages, par exemple pour l'établissement de situations aériennes ou l'échange de situations par des liaisons de données tactiques.

En ce qui concerne les solutions de remontées d'informations, c'est-à-dire d'échanges d'informations depuis un domaine de confidentialité donné vers un domaine de confidentialité supérieure, le problème de la confidentialité à traiter ne se pose pas. Les solutions de remontées d'informations existantes se limitent à empêcher le cheminement inverse des données à traiter. Pour cela, de telles solutions utilisent le plus souvent des liaisons unidirectionnelles de transfert de données, telles que des diodes de sécurité, permettant d'orienter les flux de données et d'empêcher de manière physique le cheminement inverse des données.

Toutefois, de telles solutions de remontées d'informations n'analysent pas le contenu des messages échangés et n'apportent donc pas de protection contre les éventuelles injections de données par des pirates informatiques.

Il est connu des documents US 2004/111639 A, US 7 293 175 B et US 2014/201273 A des systèmes de sécurité utilisant des règles de filtrage pour transmettre des données.

Il existe donc un besoin pour la mise en œuvre d'un système électronique permettant de filtrer et d'échanger des données de manière sécurisée entre des domaines de confidentialité, éventuellement différents, et qui soit configurable en fonction desdits domaines de confidentialité.

A cet effet, l'invention a pour objet un système électronique selon la revendication 1.

Suivant d'autres aspects avantageux de l'invention, le système électronique comprend une ou plusieurs des caractéristiques des revendications 2 à 11, prises isolément ou suivant toutes les combinaisons techniquement possibles.

L'invention concerne en outre un procédé de réémission selon la revendication 12.

L'invention concerne également un produit programme d'ordinateur selon la revendication 13.

D'autres caractéristiques et avantages de l'invention apparaîtront à la lecture de la description qui suit de modes de réalisation de l'invention, donnée uniquement à titre d'exemple non limitatif et en référence aux dessins annexés, sur lesquels :
- la figure 1 est une représentation schématique d'un système électronique de réémission sécurisée de messages selon l'invention, et
- la figure 2 est un organigramme d'un procédé de réémission sécurisée de messages à l'aide du système électronique de la figure 1.

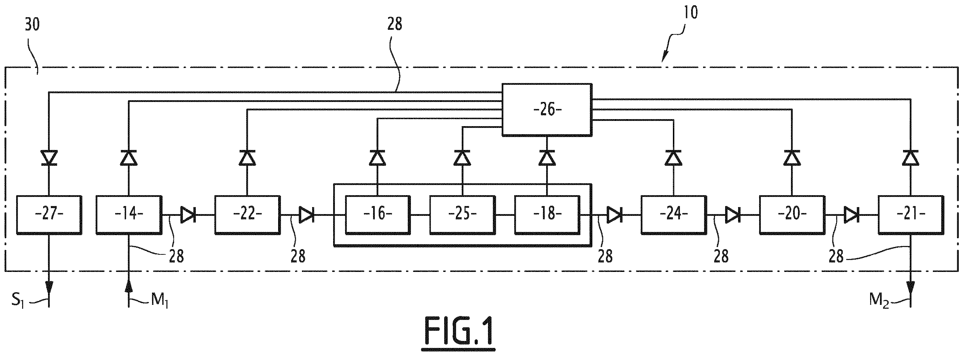

Sur la figure 1, un système électronique 10 permet de transférer des données entre différents domaines ayant éventuellement des niveaux de confidentialité différents. Un niveau de confidentialité regroupe une catégorie spécifique d'informations. Les niveaux de confidentialité sont généralement choisis parmi un groupe consistant en : très secret, secret, confidentiel, restreint et non classifié. Une information classifiée est une information sensible dont l'accès est restreint par une loi ou un règlement à un groupe spécifique de personnes. Les domaines sont, par exemple, des systèmes d'élaboration d'une situation aérienne, spatiale, maritime, terrestre, ou cyber, ou encore des organisations gouvernementales, quel que soit leur niveau de confidentialité.

En particulier, le système électronique 10 permet de déclassifier en temps réel des données transmises depuis un domaine de confidentialité donnée vers un domaine de confidentialité inférieure. Par exemple, le système électronique 10 permet de déclassifier des messages depuis un domaine de niveau « secret défense » vers un domaine de niveau « confidentiel défense », depuis un domaine de niveau « confidentiel défense » vers un domaine de niveau « diffusion restreinte », ou encore depuis un domaine de niveau « diffusion restreinte » vers un domaine de niveau « non classifié ».

Le système électronique 10 permet, en particulier, la déclassification des données en temps réel dans le cas d'échanges bidirectionnels entre des domaines militaires de niveaux différents de confidentialité ou entre des domaines militaires et civils, notamment.

En outre, le système électronique 10 permet également de filtrer les données transmises depuis des domaines de simulation et d'entrainement vers des domaines opérationnels, pour éviter que des situations simulées ne viennent interférer avec des situations du monde réel.

Dans le cas d'une remontée d'informations depuis un domaine de confidentialité donnée vers un domaine de confidentialité supérieure, ou d'échanges d'informations entre des domaines de confidentialité identique, le système électronique 10 assure la sécurisation et la protection des données échangées.

Comme illustré sur la figure 1, le système électronique 10 est configuré pour recevoir en entrée des messages M₁ en provenance d'installations ayant un premier niveau de confidentialité et pour réémettre en sortie des messages M₂ à destination d'installations ayant un deuxième niveau de confidentialité. Les messages M₂ correspondent aux messages M₁ après leur traitement par le système électronique 10.

Dans le cas d'une déclassification d'informations, le premier niveau de confidentialité est supérieur au deuxième niveau de confidentialité.

Dans le cas d'une remontée d'informations, le premier niveau de confidentialité est inférieur au deuxième niveau de confidentialité.

En variante encore, dans un cas de protection des informations par transcodage, le premier niveau de confidentialité et le deuxième niveau de confidentialité sont identiques.

En particulier, les messages reçus par le système électronique 10 sont issus et/ou à destination d'une installation choisie parmi le groupe consistant en : un aéronef, un radar, un centre de contrôle, une organisation gouvernementale telle que l'OTAN (acronyme de *Organisation du Traité Atlantique Nord*), une installation militaire, une installation civile, un logiciel de simulation, un satellite, un bâtiment naval, un sous-marin, une navette spatiale et plus généralement tout type de système d'information installé dans un centre, un véhicule ou un équipement individuel.

Les messages M₁ reçus par le système électronique 10 comportent des données et une enveloppe de transport de ces données. L'enveloppe de transport comprend, par exemple différents champs contenant respectivement, l'émetteur et le destinataire des données et la date d'envoi des données. L'enveloppe de transport des données est, par exemple, une enveloppe IP (acronyme de l'anglais *Internet Protocol*). Les données sont, par exemple, des ordres de commande d'un aéronef, des ordres de tir ou encore des données de localisation.

De même, les messages M₂ en sortie du système électronique 10 comportent des données et une enveloppe de transport de ces données.

Le système électronique 10 comprend un enchaînement de modules connectés en série, notamment : un module 14 de suppression de l'enveloppe de transport de chaque message M₁, un premier module 16 de conversion et de sélection, un deuxième module 18 de conversion et de sélection, un module 20 d'ajout d'une enveloppe de transport relative à chaque message M₁ et un module 21 d'émission des messages M₂. Dans le mode de réalisation illustré sur la figure 1, le système électronique 10 comprend également au moins un module de protection 22, 24, un module de stockage 25, un module de supervision 26 et un module de transmission 27.

Dans le mode de réalisation illustré sur la figure 1, la sortie du module de suppression 14 est connectée à l'entrée du premier module 16, de préférence par l'intermédiaire d'un premier module de protection 22. La sortie du premier module 16 est connectée à l'entrée du deuxième module 18, de préférence par l'intermédiaire du module de stockage 25. La sortie du deuxième module 18 est connectée à l'entrée du module d'ajout 20, de préférence par l'intermédiaire d'un deuxième module de protection 24. La sortie du deuxième module 18 est connectée à l'entrée du module d'émission 21 qui réémet en sortie les messages M₂. En outre, les modules 14, 16, 18, 20, 21, 22, 24, 25 sont chacun connectés, indépendamment les uns des autres, au module de supervision 26. De plus, le module de supervision 26 est connecté au module de transmission 27.

Les modules 14, 16, 18, 20, 21, 22, 24, 25, 26, 27 du système électronique 10 sont mis en œuvre via des machines virtuelles, connues en soi, reliées les unes aux autres par des liaisons unidirectionnelles de transfert de données 28. Le système électronique 10 comprend alors une unité de traitement d'informations, non représentée, formée par exemple d'un processeur et d'une mémoire associée au processeur. Le processeur est alors configuré pour exécuter les machines virtuelles, celles-ci étant en forme d'un ou de plusieurs logiciels stockés dans la mémoire.

L'utilisation de machines virtuelles permet d'assurer une séparation spatio-temporelle des traitements effectués par chaque module 14, 16, 18, 20, 21, 22, 24, 25, 26, 27.

Dans un mode de réalisation préféré, illustré sur la figure 1, le premier module 16, le deuxième module 18 et le module de stockage 25 sont mis en œuvre sur une même machine virtuelle.

Les liaisons unidirectionnelles de transfert de données 28 sont, par exemple, conformes à une norme filaire. La norme filaire est par exemple la norme IEEE 802.3 ou la norme PCI Express. En variantes, d'autres types de liaisons filaires, optiques ou électriques sont encore envisagés.

Les liaisons 28 sont configurées pour isoler les différentes machines virtuelles et garantir ainsi la non-réversibilité du cheminement des données. La non-réversibilité du cheminement des données consiste à bloquer la remontée des données dans le sens inverse des traitements, c'est-à-dire depuis la sortie vers l'entrée du système électronique 10.

Dans le mode de réalisation de la figure 1, le sens de cheminement des données, aussi appelé chemin critique, correspond au sens allant depuis le module de suppression 14 vers le module d'émission 21, en passant par le premier module de protection 22, le premier module 16, le module de stockage 25, le deuxième module 18, le deuxième module de protection 24, puis le module d'ajout 20. Ainsi, le module de suppression 14 et le premier module de protection 22 sont situés en amont du premier module 16 et du deuxième module 18 par rapport au sens de cheminement des données à l'intérieur du système électronique 10. Le deuxième module de protection 24, le module d'ajout 20 et le module d'émission 21 sont situés en aval du premier module 16 et du deuxième module 18 par rapport au sens de cheminement des données à l'intérieur du système électronique 10.

Les liaisons unidirectionnelles de transfert de données 28 permettent donc le transfert des données dans le sens de cheminement des données et le blocage des données en sens inverse. Ainsi, les fuites de données sensibles notamment lors d'une déclassification d'informations sont bloquées de par l'unidirectionnalité des liaisons 28.

De préférence, le système électronique 10 comprend, un hyperviseur 30 comportant les machines virtuelles mettant en œuvre les modules 14, 16, 18, 20, 21, 22, 24, 25, 26, 27. Un hyperviseur est une plateforme de virtualisation qui permet à plusieurs systèmes d'exploitation de travailler sur une même machine physique en même temps. Le système d'exploitation de l'hyperviseur est, par exemple, PikeOS® ou PolyXen®.

Le module de suppression 14 est configuré, d'une part, pour recevoir les messages M₁ arrivant sur le système électronique 10 et, d'autre part, pour supprimer l'enveloppe de transport de chaque message M₁ reçu par le système électronique 10. Ainsi, en sortie du module de suppression 14, seules les données desdits messages M₁ sont transmises à destination du premier module 16. L'enveloppe de transport est, en effet, plus facilement piratable que les données en elles-mêmes, les pirates informatiques pouvant par exemple les modifier, notamment changer le destinataire ou l'émetteur du message. Les informations contenues dans l'enveloppe de transport sont supprimées du système électronique 10. Les informations des enveloppes de transport sont, par exemple, connues et invariables. De telles informations sont par exemple « claquées » en dur, c'est-à-dire intégrées de manière inaltérable au système électronique 10 lors de sa fabrication.

Le module de suppression 14 permet donc de contrer d'éventuelles attaques cachées dans les enveloppes de transport des messages en supprimant directement ces enveloppes de transport. Une telle suppression de l'enveloppe de transport est une rupture protocolaire, c'est-à-dire un changement de protocole qui permet de se protéger des attaques par débordement, faille protocolaire, canal caché ou encore par injection de données.

Par mesure de sécurité additionnelle, le module de suppression 14 est de préférence dépourvu de système d'exploitation. De manière générale, un module dépourvu de système d'exploitation est un module dépourvu de moyens permettant la connexion d'opérateurs extérieurs. Typiquement, pour un module dépourvu de système d'exploitation, un pilote informatique d'une carte réseau est intégré seul dans la machine virtuelle du module, sans intégration des moyens permettant la connexion d'opérateurs extérieurs au module.

En variante, la fonction de réception de messages et la fonction de suppression de l'enveloppe de transport sont réalisées par deux modules distincts, reliés l'un à l'autre par une liaison unidirectionnelle de transfert de données 28.

Le premier module 16 est configuré pour convertir les données reçues par le système électronique 10 d'un format initial vers un format intermédiaire. Une telle conversion des données est une rupture de messagerie, c'est-à-dire un changement du format des données en provenance d'une messagerie, pour se protéger des attaques informatiques, notamment des attaques par débordement, faille protocolaire, canal caché ou injection de données.

Le format initial des données est, par exemple, le format binaire.

Le format intermédiaire des données comprend un premier champ contenant une indication des données à conserver et un deuxième champ contenant les données. Le format intermédiaire comprend, de préférence, un troisième champ contenant un identifiant desdites données. L'indication contenue dans le premier champ est, par exemple, la longueur des données à conserver et leur position, par exemple, les N premiers bits des données à conserver ou encore les N derniers bits des données à conserver, N étant un nombre entier.

Le format intermédiaire est, par exemple, le format KLV (acronyme de l'anglais *Key-Length-Value*) conformément à la norme SMPTE 336 M-2007 dans lequel la lettre « K » désigne le troisième champ, la lettre « L » désigne le premier champ et la lettre « V » désigne le deuxième champ, l'indication contenue dans le premier champ étant alors la longueur des données à conserver avec, par exemple, la convention selon laquelle les premiers bits de données sont conservés.

Par exemple, les données contenues dans le message M₁ comportent le nom, «Air France », d'une compagnie aérienne au format binaire. Le premier module 16 permet dans cet exemple de convertir le format binaire du message au format KLV selon la norme SMPTE 336 M-2007. Dans le format KLV, l'indication du premier champ est le nombre de caractères des données, c'est-à-dire dix pour « Air France », le contenu du deuxième champ est la donnée « Air France » et l'identifiant du troisième champ est le type de données, c'est-à-dire le « nom d'une compagnie aérienne ».

Puis, une fois la conversion des données du format initial vers le format intermédiaire effectuée, le premier module 16 est configuré pour sélectionner parmi les données du deuxième champ correspondant à l'indication du premier champ, les données appartenant à une première liste de données autorisées en réception.

La sélection par le premier module 16 de données, parmi les données du deuxième champ conformes à l'indication du premier champ, permet d'empêcher le transfert d'éventuelles données additionnelles qui auraient pu être ajoutées par un pirate informatique dans le deuxième champ. En reprenant l'exemple précédent, même si un pirate informatique ajoute des données additionnelles à la suite de la donnée « Air France » dans le deuxième champ, ces données additionnelles ne seront pas prises en compte puisque le premier champ indique que les données du deuxième champ comportent seulement dix caractères. Dans cet exemple, seuls les dix caractères correspondants à la donnée « Air France » sont donc pris en compte par le premier module 16.

La première liste de données autorisées en réception est une liste blanche, c'est-à-dire une liste décrivant des données de sorte que seules les données décrites sur cette liste sont autorisées, les autres données étant exclues et bloquées.

Par exemple, les messages reçus par le système électronique 10 sont conformes à la norme ASTERIX et la première liste de données est configurée pour autoriser des catégories de messages définies selon la norme ASTERIX.

La norme ASTERIX (acronyme de l'anglais *All purpose s*t*ructured Eurocontrol surveillance information exchange*) décrit notamment un format utilisé pour la transmission de données issues de capteurs de surveillance. La norme ASTERIX définit différentes catégories de données allant de 0 à 255. Par exemple, les catégories de 0 à 127 regroupent les données issues d'applications standards civiles et militaires, les catégories allant de 128 à 240 regroupent les données issues d'applications spéciales pour le domaine militaire et les catégories de 241 à 255 regroupent des données issues d'applications non-standards civiles et militaires.

Le deuxième module 18 est configuré pour sélectionner, parmi les données du deuxième champ sélectionnées par le premier module 16 et correspondant à l'indication du premier champ, les données appartenant à une deuxième liste de données autorisées en émission.

La deuxième liste de données autorisées en émission est une liste blanche. Dans le dernier exemple, la deuxième liste de données est configurée pour autoriser des catégories de messages définies selon la norme ASTERIX.

Puis, une fois la sélection effectuée, ledit deuxième module 18 est configuré pour convertir les données sélectionnées par ledit deuxième module 18 du format intermédiaire vers un format final. Le format final est par exemple le format initial des messages, notamment le format binaire.

Par exemple, les messages reçus par le système électronique 10 appartiennent à trois catégories de messages définies selon la norme ASTERIX : une première catégorie de messages dite primaire, une deuxième catégorie de messages dite secondaire et une troisième catégorie de messages décrivant des informations de guerre électronique. La première catégorie et la deuxième catégorie correspondent, par exemple, à la catégorie 48 de la norme ASTERIX. La troisième catégorie correspond, par exemple, à la catégorie 34 de la norme ASTERIX. De tels messages sont par exemple issus de radars.

La première liste de données autorisées en réception est alors configurée pour autoriser chacune des trois catégories citées. La deuxième liste de données autorisées en émission est configurée pour autoriser les données appartenant à la première et à la deuxième catégorie, mais pour bloquer les données appartenant à la troisième catégorie. Dans cet exemple, la première liste permet de filtrer des messages qui appartiendraient à d'autres catégories que les trois catégories mentionnées et qui auraient par exemple été rajoutés par un pirate informatique.

Dans cet exemple, la première liste de données assure donc la protection de l'intégrité des données transitant dans le système électronique 10. La deuxième liste permet de filtrer les données qui seront réémises par le système électronique 10 en supprimant les données appartenant à la troisième catégorie. Un tel filtrage est par exemple envisagé lors d'envois de données depuis une installation militaire vers une installation civile à laquelle les informations de guerre électronique ne doivent pas être communiquées. Dans cet exemple, la deuxième liste de données assure donc la déclassification des données entre des installations de niveaux de confidentialité différents.

Ainsi, dans le cas d'une déclassification d'informations, la première liste de données autorisées en réception est différente de la deuxième liste de données autorisées en émission.

Dans le cas d'une remontée d'informations, la première liste de données autorisées en émission est identique à la première liste de données autorisées en réception. Dans ce cas, les première et deuxième listes assurent seulement la protection de l'intégrité des données transitant dans le système électronique 10.

Il en est de même dans le cas d'échanges d'informations entre des installations de niveaux de confidentialité identiques, sauf lorsqu'un filtrage spécifique de certaines catégories de données est requis.

Le module d'ajout 20 est configuré pour ajouter l'enveloppe de transport relative à chaque message, cette enveloppe de transport ayant été préalablement configurée en usine dans le système électronique 10.

Ainsi, le message M₂ en sortie du système électronique 10 comporte des données et une enveloppe de transport de ces données.

Par mesure de sécurité additionnelle, le module d'ajout 20 est de préférence dépourvu de système d'exploitation.

Le module d'émission 21 est configuré pour émettre les données sélectionnées par le deuxième module 18 après leur passage par le module d'ajout 20. Le module d'émission 21 est configuré pour émettre les données vers une installation définie : une installation de niveau de confidentialité inférieur dans le cas d'une déclassification d'informations, une installation de niveau de confidentialité supérieur dans le cas d'une remontée d'informations et une installation de niveau de confidentialité identique dans le cas d'une protection des informations, par exemple.

Par mesure de sécurité additionnelle, le module d'émission 21 est de préférence dépourvu de système d'exploitation.

En variante, les fonctions du module d'ajout 20 et du module d'émission 21 sont regroupées dans un seul et même module.

Les modules de protection 22 et 24 sont choisis parmi le groupe consistant en : un routeur, un pare-feu, un système de détection d'intrusions et un système anti-virus. Un routeur est un élément intermédiaire dans un réseau informatique assurant le routage de paquets, c'est-à-dire le transit de paquets d'une interface réseau vers une autre selon un ensemble de règles. Un pare-feu est un logiciel et/ou un équipement électronique permettant de faire respecter la politique de sécurité du réseau. Une politique de sécurité d'un réseau définit les communications autorisées sur un réseau informatique. Un système de détection d'intrusions est un mécanisme destiné à repérer des activités anormales ou suspectes sur une cible analysée, permettant ainsi d'avoir une connaissance des tentatives réussies et échouées d'intrusions. Un système anti-virus est un système, de préférence logiciel, conçu pour identifier, neutraliser et éliminer des logiciels malveillants.

Dans le mode de réalisation illustré sur la figure 1, le système électronique 10 comprend deux modules de protection : le premier module de protection 22 est situé en amont du premier module 16 et du deuxième module 18 et le deuxième module de protection 24 est situé en aval du premier module 16 et du deuxième module 18 par rapport au sens de cheminement des données dans le système électronique 10.

Le premier module de protection 22 est propre à effectuer une première série d'analyses des données pour vérifier que les données transportées n'ont pas été corrompues.

De même, le deuxième module de protection 24 est configuré pour effectuer une deuxième série d'analyse des données pour vérifier que les données n'ont pas été corrompues dans le système électronique 10.

Le module de stockage 25 est configuré pour stocker dans une mémoire, les messages sélectionnés par le premier module 16. Les messages sélectionnés par le deuxième module 18 sont dans ce cas sélectionnés parmi les messages stockés dans ladite mémoire. Le module de stockage 25 permet donc de relayer les données entre le premier module 16 et le deuxième module 18. Autrement dit, le module de stockage 25 forme une mémoire tampon.

Le module de supervision 26 est connecté à chaque module 18, 20, 21, 22, 24, 25 du système électronique 10 via des liaisons unidirectionnelles 28 de sorte que chaque liaison unidirectionnelle 28 relie le module de supervision 26 à un unique module 18, 20, 21, 22, 24, 25 respectif. Le module de supervision 26 est également connecté au module de transmission 27 via une liaison unidirectionnelle 28 de sorte que le transfert de données entre ces deux modules 26, 27 se fasse uniquement depuis le module de supervision 26 vers le module de transmission 27.

Le module de supervision 26 est configuré pour recevoir des paramètres en provenance de chaque module 14, 16, 18, 20, 21, 22, 24, 25 et pour corréler ces paramètres entre eux de sorte à calculer un ou plusieurs indicateurs de supervision. Le module de supervision 26 est propre à envoyer le ou les indicateurs calculés à des systèmes extérieurs. Les paramètres sont, par exemple, le taux d'utilisation du processeur du module, l'historique de démarrage du module ou le nombre de cycles d'arrêt et de redémarrage du module. Le taux d'utilisation du processeur, aussi appelé taux de charge du processeur, est relatif au niveau de fonctionnement du processeur. L'historique de démarrage d'un module, aussi appelé « log » en anglais, est un fichier contenant les informations relatives au démarrage du module. La corrélation consiste à croiser les différents paramètres reçus selon des règles prédéterminées et connues en soi. Les indicateurs sont des synthèses des corrélations obtenues, éventuellement converties dans un format externe lisible par le système extérieur destinataire. Les indicateurs sont par exemple des alertes. Les systèmes extérieurs sont, par exemple, un administrateur réseau, un dispositif de sécurisation des systèmes d'informations ou encore un dispositif de cyber-défense. Les formats externes sont par exemple le format IDMEF (acronyme de l'anglais *Intrusion Detection Message Exchange Format*), le format associé au protocole SYSLOG, par exemple conforme à la norme RFC 5424, ou encore le format associé au protocole SNMP (acronyme de l'anglais *Simple Network Management Protocol*).

A titre d'exemple, les paramètres sont le nombre de cycles d'arrêt et de redémarrage de chaque module 18, 20, 21, 22, 24, 25. Chaque module 18, 20, 21, 22, 24, 25 informe le module de supervision 26 à chaque nouveau redémarrage dudit module 18, 20, 21, 22, 24, 25. Lorsque le nombre de cycle d'un module 18, 20, 21, 22, 24, 25 est supérieur à un seuil, le module de supervision 26 envoie un indicateur sous forme d'alerte et transmet cet indicateur au format IDMEF à un administrateur réseau. Dans ce cas, le module de supervision 26 permet d'expliquer les sous-évènements, ici le nombre de cycles d'arrêts et de redémarrage des modules, à l'origine d'une alerte.

Ainsi, le module de supervision 26 permet de surveiller le bon fonctionnement interne des différents modules 18, 20, 21, 22, 24, 25 du système électronique 10 et permet donc au système électronique 10 de s'auto-protéger. En outre, le module de supervision 26 est interopérable, c'est-à-dire qu'il fonctionne quel que soit le système extérieur et ce sans restriction d'accès ou de mise en œuvre. L'interopérabilité du système de supervision 26 est notamment due à la possibilité de convertir les indicateurs dans un format externe.

Le module de transmission 27 est configuré pour ajouter une enveloppe de transport aux données en provenance du module de supervision 26. Ainsi, les groupes de données en provenance du module de supervision 26 et l'enveloppe de transport ajoutée aux groupes de données forment des messages de supervision S₁. Les informations des enveloppes de transport sont, par exemple, connues, invariables et claquées en dur dans le système électronique 10. De telles informations contiennent par exemple les adresses des systèmes extérieurs qui sont destinataires des messages de supervision S₁.

Le module de transmission 27 est également configuré pour envoyer les messages de supervision S₁ vers les systèmes extérieurs selon les informations contenues dans les enveloppes de transport ajoutées. En pratique, le module de transmission 27 est propre à envoyer les messages de supervision vers des interfaces logiques, extérieures au système électronique 10. De telles interfaces logiques redistribuent les messages de supervision vers les systèmes extérieurs en fonction notamment du format externe des données des messages de supervision S₁ et des formats de données lisibles par les systèmes extérieurs. Les interfaces logiques sont, par exemple, des interfaces SNMP, des interfaces SYSLOG et des interfaces IDMEF.

Par mesure de sécurité additionnelle, le module de transmission 27 est de préférence dépourvu de système d'exploitation.

Un tel système électronique 10 est propre à être intégré dans une installation choisie parmi : un radar, un aéronef, un centre de contrôle, une organisation gouvernementale, une installation militaire, une installation civile, un logiciel de simulation, un satellite, un bâtiment naval, un sous-marin, une navette spatiale.

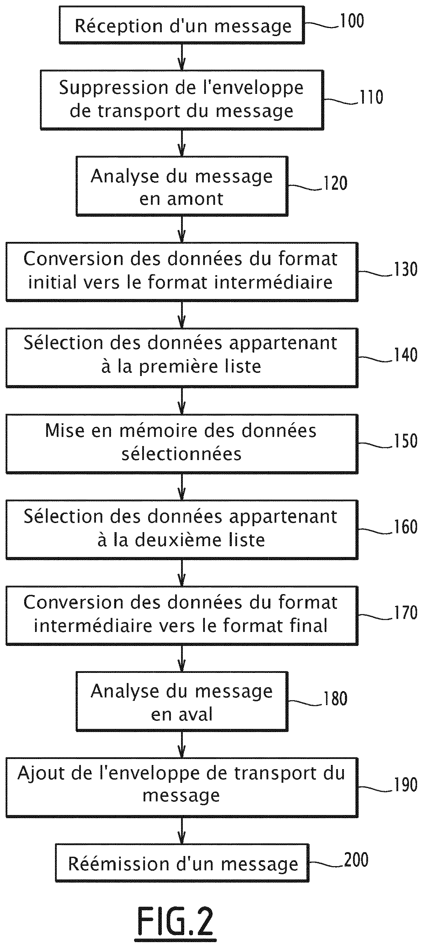

Le procédé de réémission sécurisée de messages préalablement reçus par le système électronique 10 précité va maintenant être décrit en référence à la figure 2.

Initialement, le procédé comprend une étape 100 de réception des messages M₁, chaque message M₁ comportant des données et une enveloppe de transport de ces données. De tels messages M₁ sont dans le cas d'une déclassification d'informations issus d'une installation de niveau de confidentialité donnée et sont à destination d'une installation de niveau de confidentialité inférieur. Dans le cas d'une remontée d'informations, les messages reçus par le système électronique 10 sont en provenance d'une installation de niveau de confidentialité donnée et sont à destination d'une installation de niveau de confidentialité supérieur. Dans le cas d'une protection d'information, sans remontée ni filtrage d'informations, les messages reçus par le système électronique 10 sont en provenance d'une installation de niveau de confidentialité donné et sont à destination d'une installation de niveau de confidentialité équivalent.

Les messages M₁ reçus par le système électronique 10 sont acheminés vers le module de suppression 14 via une liaison unidirectionnelle 28 correspondante.

Le procédé comprend ensuite une étape 110 de suppression de l'enveloppe de transport de chaque message M₁ par le module de suppression 14. Les données sont alors acheminées depuis le module de suppression 14 vers le premier module de protection 22 via une liaison unidirectionnelle 28.

Le procédé comprend ensuite une étape 120 d'analyse des messages par le premier module de protection 22. Ensuite, les données sont acheminées depuis le premier module de protection 22 vers le premier module 16 via une liaison unidirectionnelle 28 correspondante.

Le procédé comporte alors une étape 130 de conversion des données du format initial vers le format intermédiaire par le premier module 16.

Ensuite, lors d'une étape de sélection 140, le premier module 16 sélectionne, parmi les données du deuxième champ correspondant à l'indication du premier champ, les données appartenant à la première liste de données autorisées en réception.

Puis, lors d'une étape de mise en mémoire 150, les données sélectionnées par le premier module 16 sont mise en mémoire par le module de stockage 25.

Après l'étape de mise en mémoire 150, le procédé comprend une étape 160 de sélection, par le deuxième module 18 et, parmi les données du deuxième champ sélectionnées par le premier module 16 et correspondant à l'indication du premier champ, des données appartenant à la deuxième liste de données autorisées en émission.

Ensuite, lors d'une étape de conversion 170, le deuxième module 18 convertit les données sélectionnées par ledit deuxième module 18 du format intermédiaire vers le format final. Les données sont alors acheminées depuis le deuxième module 18 vers le deuxième module de protection 24 via une liaison unidirectionnelle 28 correspondante.

Le procédé comprend par la suite une étape 180 d'analyse des messages par le deuxième module de protection 24. Ensuite, les données sont acheminées depuis le deuxième module de protection 24 vers le module d'ajout 20 via une liaison unidirectionnelle 28 correspondante.

Lors d'une étape d'ajout 190, le module d'ajout 20 ajoute à chaque message une enveloppe de transport relative audit message. Puis les messages sont acheminés depuis le module d'ajout 20 vers le module d'émission 21 via une liaison unidirectionnelle 28 correspondante.

Enfin, lors d'une étape de réémission 200, le module d'émission 21 réémet les messages vers l'installation destinatrice.

En outre, lors des différentes étapes 100, 110, 120, 130, 140, 150, 160, 170, 180, 190, 200 du procédé, les modules 18, 20, 21, 22, 24, 25 transmettent leurs paramètres au module de supervision 26. Le module de supervision 26 corrèle et analyse ces paramètres en vue d'obtenir des indicateurs qui sont ensuite envoyés au module de transmission 27.

Le module de transmission 27 ajoute à chaque donnée ou groupe de données en provenance du module de supervision 26, une enveloppe de transport et envoie les messages de supervision S₁ obtenus à des systèmes extérieurs en fonction des informations contenues dans l'enveloppe de transport.

En variante, le module de suppression 14 est propre à mémoriser les informations contenues dans l'enveloppe de transport du message. Puis, le module de suppression 14 est propre à transférer les informations relatives à l'enveloppe de transport au module d'ajout 20 via un chemin de transfert particulier, différent du chemin critique de transfert des données des messages. Le cas échéant, un traitement similaire à celui appliqué aux données est appliqué aux informations de l'enveloppe de transport sur le chemin particulier. Un tel traitement permet notamment de se protéger des attaques par débordement, faille protocolaire, canal caché ou encore par injection de données. Le module d'ajout 20 est configuré pour ajouter au message correspondant l'enveloppe de transport mémorisée et traitée.

Ainsi, le système électronique 10 permet de filtrer et d'échanger des données de manière sécurisée entre des réseaux de confidentialité éventuellement différentes. De manière générale, la protection des données est assurée par application d'une ou de plusieurs ruptures différentes successives : une première rupture protocolaire mise en œ uvre par le module de suppression 14, une double rupture de messagerie mise en œ uvre par les premier et deuxième modules 16, 18 et une dernière rupture protocolaire mise en œuvre par le module d'ajout 20.

L'utilisation de machines virtuelles et de liaisons unidirectionnelles entre ces machines virtuelles permet d'isoler les données transitant sur le système 10 et d'assurer la non-réversibilité du sens de cheminement de ces données.

En particulier, le système électronique 10 permet la déclassification d'informations et la remontée d'informations de manière sécurisée. En outre, dans le cas d'une déclassification d'informations, le système électronique 10 permet également, outre le filtrage des données, la dégradation desdites données. Par exemple, une position donnée au mètre près issue d'une installation donnée, notamment militaire, est dégradée en une position précise à 10 mètres près après passage dans le système électronique 10, pour être envoyée vers une installation de niveau de confidentialité inférieur, telle qu'une installation civile. Une telle dégradation des données est aussi appelée « blanchiment » des données.

Le système électronique 10 introduit, en outre, des protections permettant d'empêcher les intrusions, de les détecter, mais aussi de les bloquer, et ce notamment grâce aux modules de protection 22, 24, au module de suppression 14, au module d'ajout 20, au premier module 16 et au deuxième module 18.

Le système électronique 10 permet d'effectuer l'ensemble de ces traitements en temps réel, il est donc approprié aux liaisons de données sous contraintes fortes de délais d'acheminement, telles que les liaisons utilisées pour l'établissement de situations aériennes ou les liaisons de données tactiques.

L'architecture globale du système électronique 10 est prédéfinie, en particulier l'assemblage des différents modules du système 10, et l'enchaînement des étapes de traitements mises en œuvre par ces modules sont génériques.

Néanmoins, en fonction du type de messages reçus, et de la norme à laquelle les messages sont conformes, les première et deuxième listes sont configurables. Ainsi, il est possible de définir les première et deuxième listes spécifiquement pour une application de déclassification d'informations ou pour une application de remontée d'informations par exemple. L'adaptabilité du système 10 est donc assurée de par la configuration possible des première et deuxième listes. Ainsi, le système électronique 10 est configurable en fonction des domaines de confidentialité échangeant les messages, et cela sans changer l'architecture globale du système électronique 10.

Le système électronique 10 assure une double fonction à savoir, d'une part, une fonction de protection des données reçues, puis réémises et, d'autre part, une fonction de filtrage des données en fonction de la configuration prédéfinie, notamment des données autorisées par les première et deuxième listes.

Bien entendu, l'homme du métier comprendra que l'invention ne se limite pas à l'agencement des modules décrits sur la figure 1. Par exemple, en complément facultatif, des modules de protection sont ajoutés en amont du module de suppression 14 et en aval du module d'ajout 21, selon le sens de cheminement des données dans le système électronique 10.

## Revendications

1. Système électronique (10) de réémission sécurisée de messages (M₁, M₂) préalablement reçus par ledit système (10), le système électronique (10) étant configuré pour recevoir en entrée des messages (M₁) en provenance d'installations ayant un premier niveau de confidentialité et pour réémettre en sortie des messages (M₂) à destination d'installations ayant un deuxième niveau de confidentialité, chaque message (M₁, M₂) comportant des données et une enveloppe de transport de ces données, le système (10) comprenant :
- un premier module (16) configuré pour sélectionner, parmi les données des messages (M₁) reçus, des données appartenant à une première liste de données autorisées en réception, le premier module (16) étant configuré pour convertir les données reçues du format initial vers un format intermédiaire, le format intermédiaire comprenant un premier champ contenant une indication des données à conserver et un deuxième champ contenant les données,
- un deuxième module (18) configuré pour sélectionner, parmi les données sélectionnées par le premier module (16), des données appartenant à une deuxième liste de données autorisées en émission, le deuxième module (18) étant configuré pour convertir les données sélectionnées par ledit deuxième module (18) du format intermédiaire vers un format final, et
- un module d'émission (21) configuré pour émettre les données sélectionnées par le deuxième module (18).

2. Système électronique (10) selon la revendication 1, dans lequel la première liste de données autorisées en réception est différente de la deuxième liste de données autorisées en émission.

3. Système électronique (10) selon la revendication 1 ou 2, dans lequel les messages (M₁) reçus par le système électronique (10) sont conformes à la norme ASTERIX, chacune des première et deuxième listes étant configurée pour autoriser des catégories de messages définies selon la norme ASTERIX.

4. Système électronique (10) selon l'une quelconque des revendications 1 à 3, dans lequel le format intermédiaire comprend en outre un troisième champ contenant un identifiant desdites données.

5. Système électronique (10) selon l'une quelconque des revendications 1 à 4, dans lequel le premier module (16) est configuré pour convertir les données reçues du format initial vers le format intermédiaire, puis pour sélectionner, parmi les données du deuxième champ correspondant à l'indication du premier champ, les données appartenant à la première liste de données autorisées en réception.

6. Système électronique (10) selon l'une quelconque des revendications 1 à 5, dans lequel le deuxième module (18) est configuré pour sélectionner, parmi les données du deuxième champ sélectionnées par le premier module (16) et correspondant à l'indication du premier champ, les données appartenant à la deuxième liste de données autorisées en émission et pour convertir les données sélectionnées par ledit deuxième module (18) du format intermédiaire vers le format final.

7. Système électronique (10) selon l'une quelconque des revendications précédentes, dans lequel le système (10) comprend en outre, en amont du premier module (16), un module de suppression (14) de l'enveloppe de transport de chaque message (M₁, M₂) et, en aval du deuxième module (18), un module d'ajout (20) de l'enveloppe de transport relative à chaque message (M₁, M₂).

8. Système électronique (10) selon l'une quelconque des revendications précédentes, dans lequel les modules (14, 16, 18, 20, 21, 22, 24, 25, 26, 27) sont mis en œuvre via des machines virtuelles reliées les unes aux autres par des liaisons unidirectionnelles de transfert de données (28).

9. Système électronique (10) selon la revendication 8, dans lequel le système électronique (10) comprend un hyperviseur (30) comportant lesdites machines virtuelles.

10. Système électronique (10) selon l'une quelconque des revendications précédentes, dans lequel le système (10) comprend en outre, un module de supervision (26) connecté à au moins un module (18, 20, 21, 22, 24, 25) du système électronique (10), le module de supervision (26) étant configuré pour recevoir un ou plusieurs paramètres en provenance dudit module (18, 20, 21, 22, 24, 25) et pour corréler ces paramètres entre eux de sorte à obtenir un ou plusieurs indicateurs de supervision.

11. Système électronique (10) selon la revendication 10, dans lequel le module de supervision (26) est propre à envoyer les indicateurs calculés à des systèmes extérieurs.

12. Procédé de réémission sécurisée de messages (M₁, M₂) préalablement reçus par un système électronique (10), le système électronique (10) étant configuré pour recevoir en entrée des messages (M₁) en provenance d'installations ayant un premier niveau de confidentialité et pour réémettre en sortie des messages (M₂) à destination d'installations ayant un deuxième niveau de confidentialité, chaque message (M₁, M₂) comportant des données et une enveloppe de transport de ces données, le système (10) comprenant :
- un premier module (16) configuré pour sélectionner, parmi les données des messages (M₁) reçus, des données appartenant à une première liste de données autorisées en réception, le premier module (16) étant configuré pour convertir les données reçues du format initial vers un format intermédiaire, le format intermédiaire comprenant un premier champ contenant une indication des données à conserver et un deuxième champ contenant les données,
- un deuxième module (18) configuré pour sélectionner, parmi les données sélectionnées par le premier module (16), des données appartenant à une deuxième liste de données autorisées en émission, le deuxième module (18) étant configuré pour convertir les données sélectionnées par ledit deuxième module (18) du format intermédiaire vers un format final, et
- un module d'émission (21) configuré pour émettre les données sélectionnées par le deuxième module (18),
le procédé étant mis en œuvre par le système électronique (10) et comprenant :
- la sélection (140), par le premier module (16), parmi les données des messages (M₁) reçus, des données appartenant à la première liste de données autorisées en réception,
- la sélection (160), par le deuxième module (18), parmi les données sélectionnées par le premier module (16), des données appartenant à la deuxième liste de données autorisées en émission, et
- la réémission (200), par le module d'émission (21), des données sélectionnées par le deuxième module (18).

13. Produit programme d'ordinateur comportant des instructions logicielles qui lorsqu'elles sont exécutées par un ordinateur mettent en œuvre le procédé selon la revendication 12.

## Patentansprüche

1. Elektronisches System (10) zur sicheren Weiterleitung von Nachrichten (M₁, M₂), welche zuvor durch das System (10) empfangen wurden, wobei das elektronische System (10) dazu eingerichtet ist, Nachrichten (M₁) am Eingang zu empfangen, welche von Einrichtungen, welche ein erstes Vertraulichkeitsniveau aufweisen, stammen, und Nachrichten (M₂) am Ausgang hin zu Einrichtungen, welche ein zweites Vertraulichkeitsniveau aufweisen, weiterzuleiten, wobei jede Nachricht (M₁, M₂) aufweist Daten und eine Transportumhüllung dieser Daten, wobei das System (10) aufweist:
- ein erstes Modul (16), welches dazu eingerichtet ist, aus den Daten der empfangenen Nachrichten (M₁) die Daten auszuwählen, welche zu einer ersten Liste von Daten, deren Empfang zugelassen ist, gehören, wobei das erste Modul (16) dazu eingerichtet ist, die empfangenen Daten aus einem Anfangsformat in ein Zwischenformat zu konvertieren, wobei das Zwischenformat ein erstes Feld, welches eine Angabe von zu behaltenden Daten enthält, und ein zweites Feld, welches die Daten enthält, aufweist,
- ein zweites Modul (18), welches dazu eingerichtet ist, aus den durch das erste Modul (16) ausgewählten Daten die Daten auszuwählen, welche zu einer zweiten Liste von Daten, deren Aussenden zugelassen ist, gehören, wobei das zweite Modul (18) dazu eingerichtet ist, die durch das zweite Modul (18) ausgewählten Daten aus dem Zwischenformat in ein Endformat zu konvertieren, und
- ein Sendemodul (21), welches dazu eingerichtet ist, die durch das zweite Modul (18) ausgewählten Daten auszusenden.

2. Elektronisches System (10) gemäß dem Anspruch 1, wobei die erste Liste von Daten, deren Empfang zugelassen ist, verschieden ist von der zweiten Liste von Daten, deren Aussenden zugelassen ist.

3. Elektronisches System (10) gemäß dem Anspruch 1 oder 2, die durch das elektronische System (10) empfangenen Nachrichten (M₁) konform mit der ASTERIX-Norm sind, wobei jede von der ersten und der zweiten Liste dazu ausgestaltet ist, die Kategorien von Nachrichten, welche gemäß der ASTERIX-Norm definiert sind, zuzulassen.

4. Elektronisches System (10) gemäß irgendeinem der Ansprüche 1 bis 3, wobei das Zwischenformat ferner ein drittes Feld, welches einen Identifikator der Daten enthält, aufweist.

5. Elektronisches System (10) gemäß irgendeinem der Ansprüche 1 bis 4, wobei das erste Modul (16) dazu eingerichtet ist, die empfangenen Daten aus dem Anfangsformat in das Zwischenformat zu konvertieren, um dann aus den Daten des zweiten Felds, welche mit der Angabe des ersten Felds korrespondieren, die Daten, welche zu der ersten Liste von Daten, deren Empfang zugelassen ist, gehören, auszuwählen.

6. Elektronisches System (10) gemäß irgendeinem der Ansprüche 1 bis 5, wobei das zweite Modul (18) dazu eingerichtet ist, aus den Daten des zweiten Felds, welche durch das erste Modul (16) ausgewählt wurden und mit der Angabe des ersten Felds korrespondieren, die Daten, welche zu der zweiten Liste von Daten, deren Aussenden zugelassen ist, gehören, auszuwählen und die durch das zweite Modul (18) ausgewählten Daten aus dem Zwischenformat in das Endformat zu konvertieren.

7. Elektronisches System (10) gemäß irgendeinem der vorhergehenden Ansprüche, wobei das System (10) ferner, dem ersten Modul (16) vorgelagert, ein Modul zur Entfernung (14) der Transportumhüllung jeder Nachricht (M₁, M₂) und, dem zweiten Modul (18) nachgelagert, ein Modul zur Hinzufügung (20) der Transportumhüllung bezüglich jeder Nachricht (M₁, M₂) aufweist.

8. Elektronisches System (10) gemäß irgendeinem der vorhergehenden Ansprüche, wobei die Module (14, 16, 18, 20, 21, 22, 24, 25, 26, 27) durch virtuelle Maschinen umgesetzt werden, welche untereinander mittels unidirektionaler Datenübertragungsverbindungen (28) verbunden sind.

9. Elektronisches System (10) gemäß Anspruch 8, wobei das elektronische System (10) einen Hypervisor (30) aufweist, welcher die virtuellen Maschinen aufweist.

10. Elektronisches System (10) gemäß irgendeinem der vorhergehenden Ansprüche, wobei das System (10) ferner ein Überwachungsmodul (26) aufweist, welches mit mindestens einem Modul (18, 20, 21, 22, 24, 25) des elektronischen Systems (10) verbunden ist, wobei das Überwachungsmodul (26) dazu eingerichtet ist, einen oder mehrere Parameter, welche von dem Modul (18, 20, 21, 22, 24, 25) stammen, zu empfangen und diese Parameter miteinander zu korrelieren, so dass ein oder mehrere Überwachungsindikatoren erlangt werden.

11. Elektronisches System (10) gemäß Anspruch 10, wobei das Überwachungsmodul (26) dazu geeignet ist, die berechneten Indikatoren an externe Systeme zu versenden.

12. Verfahren zur sicheren Weiterleitung von Nachrichten (M₁, M₂), welche zuvor durch ein elektronisches System (10) empfangen wurden, wobei das elektronische System (10) dazu eingerichtet ist, Nachrichten (M₁) am Eingang zu empfangen, welche von Einrichtungen, welche ein erstes Vertraulichkeitsniveau aufweisen, stammen, und Nachrichten (M₂) am Ausgang hin zu Einrichtungen, welche ein zweites Vertraulichkeitsniveau aufweisen, weiterzuleiten, wobei jede Nachricht (M₁, M₂) aufweist Daten und eine Transportumhüllung dieser Daten, wobei das System (10) aufweist:
- ein erstes Modul (16), welches dazu eingerichtet ist, aus den Daten der empfangenen Nachrichten (M₁) die Daten auszuwählen, welche zu einer ersten Liste von Daten, deren Empfang zugelassen ist, gehören, wobei das erste Modul (16) dazu eingerichtet ist, die empfangenen Daten aus einem Anfangsformat in ein Zwischenformat zu konvertieren, wobei das Zwischenformat ein erstes Feld, welches eine Angabe von zu behaltenden Daten enthält, und ein zweites Feld, welches die Daten enthält, aufweist,
- ein zweites Modul (18), welches dazu eingerichtet ist, aus den durch das erste Modul (16) ausgewählten Daten die Daten auszuwählen, welche zu einer zweiten Liste von Daten, deren Aussenden zugelassen ist, gehören, wobei das zweite Modul (18) dazu eingerichtet ist, die durch das zweite Modul (18) ausgewählten Daten aus dem Zwischenformat in ein Endformat zu konvertieren, und
- ein Sendemodul (21), welches dazu eingerichtet ist, die durch das zweite Modul (18) ausgewählten Daten auszusenden,
wobei das Verfahren durch das elektronische System (10) umgesetzt wird und aufweist:
- das Auswählen (140), durch das erste Modul (16), der Daten, welche zur ersten Liste von Daten, deren Empfang zugelassen ist, gehören, aus den Daten der empfangenen Nachrichten (M₁),
- das Auswählen (160), durch das zweite Modul (18), der Daten, welche zur zweiten Liste von Daten, deren Aussenden zugelassen ist, gehören, aus den durch das erste Modul (16) ausgewählten Daten, und
- das Aussenden (200), durch das Sendemodul (21), der durch das zweite Modul (18) ausgewählten Daten.

13. Computerprogrammprodukt, welches logische Befehle aufweist, die bei ihrer Ausführung durch einen Computer das Verfahren gemäß dem Anspruch 12 umsetzen.

## Claims

1. An electronic retransmission system (10) for securely retransmitting messages (M₁, M₂) that have previously been received by the system (10), the electronic system (10) being configured to receive, as input, messages (M₁) from installations having a first level of confidentiality and to re-send, as output, messages (M₂) to installations having a second level of confidentiality, each message (M₁, M₂) containing the data and a transport envelope for transporting of these data, the system (10) including:
- a first module (16) configured in order to select, from among the data from the messages (M₁) received, the data belonging to a first list of reception allowable data, the first module (16) being configured in order to convert the data received from the initial format to an intermediate format, the intermediate format comprising a first field that contains an indication of the data to be maintained and a second field that contains the data.
- a second module (18) configured in order to select, from among the data selected by the first module (16), the data belonging to a second list of transmission allowable data, the second module (18) being configured in order to convert the data selected by the said second module (18) from the intermediate format to a final format, and
- a transmission module (21) configured in order to transmit the data selected by the second module (18).

2. An electronic system (10) according to claim 1, wherein the first list of reception allowable data is different from the second list of transmission allowable data.

3. An electronic system (10) according to claim 1 or 2, wherein the messages (M₁) that are received by the electronic system (10) are in compliance with the ASTERIX standard, with each of the first and second lists being configured so as to allow the categories of messages defined in accordance with the ASTERIX standard.

4. An electronic system (10) according to any one of claims 1 to 3, wherein the intermediate format also includes a third field that contains an identifier for the said data.

5. An electronic system (10) according to any one of claims 1 to 4, wherein the first module (16) is configured in order to convert the data received from the initial format to the intermediate format, and then to select, from among the data from the second field corresponding to the indication in the first field, the data belonging to the first list of reception allowable data.

6. An electronic system (10) according to any one of claims 1 to 5, wherein the second module (18) is configured in order to select, from among the data from the second field selected by the first module (16) and corresponding to the indication in the first field, the data belonging to the second list of transmission allowable data and in order to convert the data selected by the said second module (18) from the intermediate format to the final format.

7. An electronic system (10) according to any one of the preceding claims, wherein the system (10) includes in addition, upstream from the first module (16), a deletion module (14) for deleting of the transport envelope from each message (M₁, M₂) and, downstream from the second module (18), an addition module (20) for adding of the transport envelope relating to each message (M₁, M₂).

8. An electronic system (10) according to any one of the preceding claims, wherein the modules (14, 16, 18, 20, 21, 22, 24, 25, 26, 27) are implemented via virtual machines connected to each other by means of uni-directional data transfer links (28).

9. An electronic system (10) according to claim 8, wherein the electronic system (10) includes a hypervisor (30) comprising the said virtual machines.

10. An electronic system (10) according to any one of the preceding claims, wherein the system (10) includes in addition, a supervision module (26) connected to at least one module (18, 20, 21, 22, 24, 25) of the electronic system (10), the supervision module (26) being configured in order to receive one or more parameters originating from the said module (18, 20, 21, 22, 24 25) and to correlate these parameters between themselves so as to obtain one or more supervision related indicators.

11. An electronic system (10) according to claim 10, wherein the supervision module (26) is capable of sending the indicators calculated to external systems.

12. A secure retransmission method for securely retransmitting messages (M₁, M₂) that have previously been received by an electronic system (10), the electronic system (10) being configured to receive, as input, messages (M₁) from installations having a first level of confidentiality and to re-send, as output, messages (M₂) to installations having a second level of confidentiality, each message (M₁, M₂) containing the data and one transport envelope for transporting these data, the system (10) comprising:
- a first module (16) configured in order to select, from among the data from the messages (M₁) received, the data belonging to a first list of reception allowable data, the first module (16) being configured in order to convert the data received from the initial format to an intermediate format, the intermediate format comprising a first field that contains an indication of the data to be maintained and a second field that contains the data.
- a second module (18) configured in order to select, from among the data selected by the first module (16), the data belonging to a second list of transmission allowable data, the second module (18) being configured in order to convert the data selected by the said second module (18) from the intermediate format to a final format, and
- a transmission module (21) configured in order to transmit the data selected by the second module (18),
the method being implemented by the electronic system (10) and comprising:
- the selection (140), by the first module (16), from among the data from the messages (Mi), the data belonging to the first list of reception allowable data;
- the selection (160), by the second module (18), from among the data selected by the first module (16), of the data belonging to the second list of transmission allowable data; and
- the retransmission (200), by the transmission module (21), of the data selected by the second module (18).

13. A computer program product containing software instructions which upon being executed by a computer operationally implements the retransmission method as claimed in claim 12.
